**Europäisches Patentamt**

**European Patent Office**

**Office européen des brevets**

(19)

(11) Veröffentlichungsnummer : **0 583 502 B1**

(12) **EUROPÄISCHE PATENTSCHRIFT**

(45) Veröffentlichungstag der Patentschrift :
05.07.95 Patentblatt 95/27

(51) Int. Cl.$^6$ : **H02M 3/28**

(21) Anmeldenummer : **92114237.8**

(22) Anmeldetag : **20.08.92**

(54) **Schaltungsanordnung zur Erzeugung einer konstanten Ausgangsspannung.**

(43) Veröffentlichungstag der Anmeldung :
23.02.94 Patentblatt 94/08

(45) Bekanntmachung des Hinweises auf die
Patenterteilung :
05.07.95 Patentblatt 95/27

(84) Benannte Vertragsstaaten :
AT BE CH DE DK ES FR GB GR IT LI NL PT SE

(56) Entgegenhaltungen :
US-A- 4 035 716

(73) Patentinhaber : **SIEMENS
AKTIENGESELLSCHAFT
Wittelsbacherplatz 2
D-80333 München (DE)**

(72) Erfinder : **Kramer, Karl-Heinz
Johannispl. 30
W-8192 Geretsried 1 (DE)**

**EP 0 583 502 B1**

## Beschreibung

Die Erfindung bezieht sich auf eine wie im Oberbegriff des Patentanspruchs 1 angegebene Schaltungsanordnung zur Erzeugung einer konstanten Ausgangsspannung.

Eine derartige Schaltungsanordnung ist bereits aus der US-4 035 716 bzw. der US 3 890 559 bekannt. Die leht genannte Druckschrift beschreibt eine Anordnung mit zwei gleichartigen Umrichtern, die über Entkopplungsdioden eine gemeinsame Last speisen. Jeder der beiden Umrichter ist in der Lage, die Last allein zu versorgen. Der Umrichter weist jeweils einen Regler zur Regelung der Ausgangsspannung auf einen konstanten Wert auf. Der Spannungsregler arbeitet in dem Sinne, daß die Abweichung einer von einer Anordnung zur Istwertbildung abgegebenen Istwertspannung von einer Referenzspannung möglichst minimiert wird. Der Regler besteht aus einem Differentialverstärker mit zwei emittergekoppelten Transistoren und einem daran angeschlossenen weiteren Transistor. Bei dem Differentialverstärker liegt die Basis des einen Transistors an einem Abgriff eines ohmschen Spannungsteilers, der an dem zu speisenden Lastwiderstand liegt. Die Basis des anderen der beiden Transistoren des Differentialverstärkers liegt am Abgriff eines Spannungsteilers, der als Referenzspannungsquelle eine Z-Diode enthält.

Der Bezugspotentialanschluß des Reglers ist mit dem Lastwiderstand unmittelbar verbunden. Eine vergleichsweise große anderweitig an den Verbraucher gelegte Spannung am Lastwiderstand, die insbesondere von einem weiteren gleichartigen Stromversorgungsgerät stammt, würde daher an sich den Umrichter völlig sperren, so daß er nicht in der Lage wäre, gegebenenfalls die Speisung des Lastwiderstande in ausreichend kurzer Zeit zu übernehmen. Eine Zusatzschaltung, bestehend aus einem Transistor, einem Spannungsteiler und einer weiteren Z-Diode übernimmt daher gegebenenfalls die Steuerung und sorgt dann dafür, daß ein vorgegebener Wert des Ausgangsstromes nicht unterschritten wird. Der am Ausgang des Differentialverstärkers liegende Transistor, ein Optokoppler und die Zusatzschaltung sind hinsichtlich ihrer Temperaturkoeffizienten so aufeinander abgestimmt, daß temperaturbedingte Änderungen einander entgegenwirken.

Man kann andererseits die Anordnung zur Mischwertbildung so ausbilden, daß der Istwert für den Regler als Mischwert der Spannung vor und nach der Entkopplungsdiode gebildet wird. Wird eine kleine Toleranz der Ausgangsspannung gefordert, so muß der Anteil der Spannung nach der Entkopplungsdiode überwiegen. In diesem Fall sperrt jedoch das zuerst aktive Stromversorgungsgerät das andere. Wählt man zur Vermeidung dieses Problems das Mischverhältnis der Meßwerte vor und nach der Entkopplungsdiode nur als 1:1, so läßt sich nur eine begrenzte Genauigkeit der Verbraucherspannung erreichen, da der Spannungsabfall an der Entkopplungsdiode stark von der Temperatur und dem Laststrom abhängt.

Aufgabe der Erfindung ist es daher, eine Schaltungsanordnung zur Erzeugung einer konstanten Ausgangsspannung, aus der sich ein elektrischer Verbraucher über eine Entkopplungsdiode speisen läßt, so auszubilden, daß bei vergleichsweise hoher Genauigkeit der zur Verfügung zu stellenden Spannung anderweitig an den Verbraucher gelegte Spannungen den Regler nicht zum Sperren der Schaltungsanordnung veranlassen.

Gemäß der Erfindung wird die Schaltungsanordnung zur Lösung dieser Aufgabe in der im kennzeichnenden Teil des Patentanspruchs 1 angegebenen Weise ausgebildet.

Der zwischen den Ausgangsanschlüssen der Schaltungsanordnung liegende ohmsche Spannungsteiler kann dabei unmittelbar an die Ausgangsanschlüsse angeschlossen oder über eine eigene Meßleitung unmittelbar mit dem zu speisenden elektrischen Verbraucher, d.h. über eine zum Verbraucher führende Anschlußleitung mittelbar mit den Ausgangsanschlüssen der Schaltungsanordnung verbunden sein. Die Schaltungsanordnung kann zunächst allein zur Speisung des elektrischen Verbrauchers dienen.

Eine derartige Anordnung ist dazu geeignet, ohne besondere Maßnahmen durch eine weitere gleichartige Schaltungsanordnung ergänzt zu werden, so daß sich eine Einrichtung zur redundanten Speisung des Verbrauchers ergibt.

Durch die erfindungsgemäßen Maßnahmen ergibt sich eine zur redundanten Speisung geeignete Schaltungsanordnung mit Entkopplungsdiode, die bei vergleichsweise hoher Genauigkeit der erzeugten Konstantspannung eine Entkopplung des Reglers von anderweitig an den Verbraucher gelegten Spannungen gewährleistet. Ein weiterer Vorteil besteht darin, daß sich sowohl für die Entkopplungsdiode als auch für die Anordnung zur Istwertbildung eine besonders weitgehende Temperaturkompensation erzielen läßt.

Vorteilhafte Ausgestaltungen der Erfindung, mit denen sich die Temperaturkompensation optimieren läßt, gehen aus den Ansprüchen 2 bis 4 hervor.

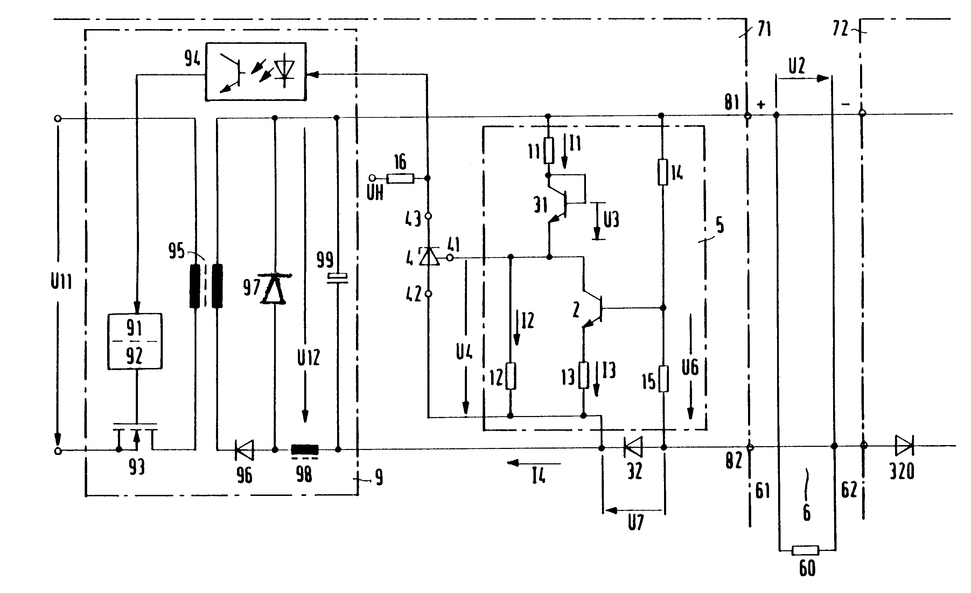

Die Erfindung wird anhand des in der Figur dargestellten Ausführungsbeispieles näher erläutert.

Die Figur zeigt eine Einrichtung zur redundanten Speisung eines elektrischen Verbrauchers über zwei Entkopplungsdioden.

Bei der in der Figur gezeigten Einrichtung liegt der elektrische Verbraucher 60 an der Sammelschiene 6. Die Sammelschiene 6 liegt an den Ausgängen der beiden Stromversorgungsgeräte 71 und 72. Beide Stromversorgungsgeräte 71 und 72 sind jeweils allein in der Lage, den Verbraucher 60 zu speisen. Auf diese Weise ergibt sich für den Verbraucher 60 eine redundante Stromversorgung.

Die Hauptstromkreise der Stromversorgungsgeräte 71 und 72 enthalten jeweils in dem zum Minuspol 62 der Sammelschiene 6 führenden Speisestrompfad eine Entkopplungsdiode 32 bzw. 320. Beide Stromversorgungsgeräte 71 und 72 sind in gleicher Weise aufgebaut. Nähere Einzelheiten sind daher in der Figur nur zu einem der beiden Stromversorgungsgeräte, und zwar zum Stromversorgungsgerät 71, dargestellt.

Der eingangsseitige Hauptstromkreis verläuft vom Eingang für die Gleichspannung U11 über die Primärwicklung des Transformators 95 und den dazu in Serie liegenden Leistungsschalter 93, der das Stellglied der Regelstrecke ist. Der ausgangsseitige Hauptstromkreis verläuft vom Ausgangsanschluß 81 über die Sekundärwicklung des Transformators 95, die Gleichrichterdiode 96, die Drossel 98 und die Entkopplungsdiode 32 zum Ausgangsanschluß 82. In einem auf die Gleichrichterdiode 96 folgenden Querzweig ist die Freilaufdiode 97 angeordnet. In einem auf die Drossel 98 folgenden Querzweig befindet sich der Speicherkondensator 99, an dem die Gleichspannung U12 auftritt.

Der ausgangsseitige Hauptstromkreis des Stromversorgungsgerätes 71 ist somit unmittelbar mit dem Ausgangsanschluß 81 und über die Entkopplungsdiode 32 mit dem Ausgangsanschluß 82 verbunden. Dabei liegt die Entkopplungsdiode 32 mit ihrer Anode am Ausgangsanschluß 82.

Der Regler 4 ist ein handelsüblicher integrierter Schaltkreis, z.B. vom Typ TL 431 der Fa. Motorola. Ein derartiger Regler weist einen Bezugsspannungsanschluß 42, einen Istwerteingang 41 und einen Stellspannungsausgang 43 auf, wobei in der Figur der Regler symbolisch als Halbleiterschalter dargestellt ist.

Der Regler 4 enthält eine Referenzspannungsquelle und gibt am Stellspannungsausgang 43 die Stellspannung U3 ab. Der Stellspannungsausgang 43 ist über den Widerstand 16 an die Hilfsspannung $U_H$ angeschlossen. Der Stellspannungsausgang 43 des Reglers 4 ist über den Optokoppler 94 an den A/D-Wandler 91 geführt, auf den der Steuerteil 92 zur Steuerung des Leistungsschalters 93 folgt.

Die Anordnung 5 zur Istwertbildung enthält einen zwischen den Ausgangsanschlüssen 81 und 82 liegenden und aus den Widerständen 14 und 15 bestehenden Spannungsteiler, der den Abgriff 85 hat. Die Anordnung zur Istwertbildung enthält zusätzlich zu dem ohmschen Spannungsteiler 14, 15 eine aktive Anordnung mit drei Stromzweigen, in denen die Ströme I1, I2 und I3 fließen.

Der erste Stromzweig, in dem der Strom I1 fließt, besteht aus dem ohmschen Widerstand 11 und der dazu in Serie angeordneten Diode 31. Die Diode 31 ist durch einen npn-Transistor realisiert, dessen Emitter und Kollektor unmittelbar miteinander verbunden sind. Die Diode 31 ist dabei so gepolt, daß sie in bezug auf die Ausgangsspannung U2 in Durchlaßrichtung gepolt ist. Die aus dem Widerstand 11 und der Diode 31 bestehende Serienschaltung ist zwischen dem Ausgangsanschluß 81 des Stromversorgungsgerätes 71 und dem Istwerteingang 41 des Reglers 4 angeordnet.

Der zweite Stromzweig, in dem der Strom I2 fließt, besteht aus dem Widerstand 12 und liegt zwischen dem Istwerteingang 41 des Reglers 4 und der Kathode der Entkopplungsdiode 32.

Der dritte Stromzweig, in dem der Strom I3 fließt, besteht aus der Emitter-Kollektorstrecke des Transistors 2 und dem dazu in Serie angeordneten Widerstand 13. Der Kollektor des Transistors 2 ist unmittelbar mit dem Istwerteingang des Reglers 4 verbunden. Der Widerstand 13 liegt zwischen dem Emitter des Transistors 2 und der Kathode der Entkopplungsdiode 32. Die Basis des Transistors 2 ist mit dem Abgriff 85 des ohmschen Spannungsteilers 14, 15 verbunden.

Im ausgangsseitigen Hauptstromkreis des Stromversorgungsgerätes 71 fließt der Ausgangsstrom I4.

Die zum Pluspol 61 der Sammelschiene 6 führenden Strompfade der Hauptstromkreise der Stromversorgungsgeräte 71 und 72 enthalten jeweils keine Entkopplungsdiode. In den Strompfaden der ausgangsseitigen Hauptstromkreise, die zum Minuspol 62 der Sammelschiene führen, liegt jeweils eine Entkopplungsdiode 32 bzw. 320. An der Sammelschiene 6 liegt eine relativ kleine Gleichspannung hoher Genauigkeit, z.B. eine Spannung von 4,8 V mit einer Toleranz von 2 %. Bei dieser Ausgangsspannung U2 handelt es sich um eine Spannung, die bezogen auf den an Bezugspotential liegenden Pluspol negativ ist.

Die Anordnung 5 zur Istwertbildung eliminiert bei optimaler Bemessung den Einfluß, den der an der Entkopplungsdiode 32 auftretende Spannungsabfall auf die konstant zu haltende Ausgangsspannung U2 haben könnte, völlig.

Der Regler 4 ist ein dreipoliger integrierter Schaltkreis, der wie ein Operationsverstärker mit integrierter Referenzspannungsquelle mit einer Referenzspannung von z.B. 2,49 V hoher Stabilität funktioniert. Bezogen auf seinen Bezugspunkt verarbeitet er nur positive Meßwerte. Dies ist dadurch berücksichtigt, daß für den Regler 4 die Kathode der Entkopplungsdiode den Bezugspunkt bildet, während der am Ausgangsanschluß 81 liegende positive Pol der Ausgangsspannung U2 des Stromversorgungsgerätes 71 dem Potential + 0 V entspricht und an Masse liegt.

Am Abgriff 85 des ohmschen Spannungsteilers 14, 15 wird ein Teil der Ausgangsspannung U2 abgegriffen und der Basis des Transistors 2 zugeführt. Der Transistor 2 arbeitet als Stromsenke für den Strom I3 und ist in Emitterschaltung angeordnet. Der Strom I2 fließt vom Istwerteingang 41 des Reglers 4 durch den Widerstand 12 zum Bezugsspannungsanschluß 42 des Reglers 4. Der Summenstrom I1 = I2 + I3 fließt von der 0-Volt-Schiene 61 durch den Widerstand 13 zum Istwerteingang 41 des Reglers 4. Die Spannung U4 am Istwerteingang 41 des Reglers 4 ist gegeben durch den Spannungsabfall am Widerstand 12 und beträgt U4 = I2 * R12.

Diese Spannung U4 wird dem Istwertspannungseingang 41 des Reglers 4 zugeführt. Der Regler regelt die Ausgangsspannung U2 des Stromversorgungsgerätes 71 so, daß die Spannung U4 gleich der internen Referenzspannung $U_{Ref}$ des Reglers 4 ist.

Die nachfolgende Schaltungsanalyse zeigt, daß die in der Figur gezeigte Schaltungsanordnung die Eigenschaft hat, daß sich die Ausgangsspannung U2 unabhängig von dem Spannungsabfall U7 der Entkopplungsdiode 32 machen läßt.

In den Formeln bezeichnen

R11   den Wert des Widerstandes 11,
R12   den Wert des Widerstandes 12,
R13   den Wert des Widerstandes 13,
U1   die Spannung zwischen Ausgangsanschluß 81 und Kathode der Entkopplungsdiode 32
U2   die Ausgangsspannung,
U3   die Spannung an der Diode 31,
U4   die Spannung am Widerstand 12,
U5   die Spannung an der Basis-Emitterstrecke des Transistors 2,
U6   die Spannung am Widerstand 15 und
U7   die Spannung an der Entkopplungsdiode 32.
*   das Symbol für die Multiplikation

(1) I1 * R11 + U3 + U4 = U1

(2) ( I3 + I2 ) * R11 + U3 + U4 = U1

(3) $\dfrac{U7 - U5 + U2*b}{R13} + \dfrac{U4}{R12} * R11 + U3 + U4 = U1$

b ist definiert als

(4) $b = \dfrac{R15}{R14 + R15}$

Durch entsprechende Bemessung wird

(5) R11 = R13 gewählt.

Eine Verwendung gleicher Transistoren für die Diode 31 und den Transistor 2 ergibt sich:

(6) U3 = U5

Der Regler 5 regelt die Ausgangsspannung U2 dadurch auf einen konstanten Wert, daß die Beziehung

(7) U4 = $U_{Ref}$

erzielt wird.

Die Figur zeigt ferner, daß

(8) U1 = U2 + U7 gilt.

aus (3), (5) und (6) folgt

(9) $U7 + U2 * b + U4 * \dfrac{R13}{R12} + U4 = U1$

mit (8)

(10) $U2b + U4 * \dfrac{R13}{R12} + U4 = U2$

aufgelöst nach U2 ergibt sich

(11) $U2 = U4 * \dfrac{1 + \dfrac{R13}{R12}}{1 - b}$

Wie das Ergebnis (11) zeigt, fällt der Einfluß der Halbleiter heraus. Die temperatur- und stromabhängige Störgröße U7 wird ganz, die Störgrößen U3 und U5 in erster Näherung eliminiert.

Die für eine vollständige Kompensation vorausgesetzte Bedingung U3 = U5 wird insbesondere dadurch erreicht, daß als Transistoren 31 und 2 gleiche Transistoren verwendet werden. Diese Transistoren werden vorzugsweise als SMD-Bausteine thermisch eng gekoppelt.

Das Widerstandsverhältnis R14:R15 wird zweckmäßigerweise mit Rücksicht auf eine optimale Kollektor-Emitterspannung für den Transistor 2 gewählt.

Die Schaltungsanordnung ist für Ausgangsspannungen U2 im Bereich von etwa 3,8 V bis 9 V besonders geeignet.

Der untere Grenzwert $U_{min}$ ergibt sich aus

$U_{min}$ = U11 + U3 + Uce2 + U13 - U7
$U_{min}$ = 1,0V + 0,7V + 1,3V + 1,2V - 0,4V = 3,8V,

wobei

U11 die Spannung am Widerstand 11,
U13 die Spannung am Widerstand 13 und
$U_{ce2}$ die Kollektor-Emitterspannung des Transistors 2 ist.

Ist das Stromversorgungsgerät 72 in Betrieb, das Stromversorgungsgerät 71 dagegen nicht, so darf die Spannung U4 = 0 sein.

Aus dieser Überlegung ergibt sich

U2 - U3 - Uebo2 - U2*b = I2 * (R11 + R12) = 0.

Die Spannung Uebo2 ist die Sperrspannung der Emitter-Basis-Diode des Transistors 2. Beim Typ BCX 70 beträgt diese 5V.

Bei einem bevorzugten Bemessungsbeispiel sind die Transistoren 31 und 2 vom Typ BCX 70. Das Widerstandsverhältnis R14:R15 ist so gewählt, daß die Spannung am Abgriff 85 des Spannugnsteilers 14, 15 1,8V beträgt. Das Teilerverhältnis b beträgt b = 0,38.

Hieraus ergibt sich

$U6_{max}$ = (0,6V + 5V) / (1 - 0,38) = 9 V

Mit Hilfe der Schaltungsanordnung läßt sich insbesondere in Anlagen der Kommunikationstechnik die Betriebssicherheit der Systeme dadurch erhöhen, daß die Stromversorgungsgeräte redundant betrieben werden. Dabei werden die das System speisenden Ausgangskreise der Stromversorgungsgeräte über Entkopplungsdioden an eine gemeinsame Sammelschiene gelegt. Obwohl für die Spannung an dieser Sammelschiene bei kleinem Absolutwert, z.B. 4,8 V eine hohe Genauigkeit bzw. kleine Toleranz von z.B. ± 2 % gefordert wird und dazu der Laststrombereich relativ groß ist, z.B. von 0 bis 8 A reicht, kann eines der beiden Stromversorgungsgeräte das andere jeweils praktisch unverzögert ablösen.

Das zuerst angeschaltete Gerät, z.B. das Gerät 72, bestimmt die an der Sammelschiene 6 liegende Spannung. Der vom ohmschen Spannungsteiler 14, 15 gelieferte Meßwert liegt jedoch aufgrund der Sperrwirkung der Kollektor-Basis- bzw. Emitter-Basisstrecke des Transistors 2 nicht am Eingang des Reglers 5 des noch nicht eingeschalteten Gerätes 71. Beim Zuschalten des Gerätes 71 entsteht kein Problem. Dem Regler 5 wird nicht sofort der von der Spannung U2 kommende Istwert angeboten. Erst wenn die Spannung U12 in die Nähe ihres Nennwertes gekommen ist, kann die Vorrichtung zur Istwertbildung arbeiten.

Das Stromversorgungsgerät 71 kann anlaufen und die geforderte Spannung erzeugen. Das Gerät 71 kann daher ohne weiteres den richtigen Betriebszustand erreichen.

Die Schaltungsanordnung ist besonders zur redundanten Speisung von Einrichtungen der elektrischen Nachrichtenübertragungstechnik geeignet.

## Patentansprüche

1. Schaltnetzteil mit einem Eingangsschalter zur Erzeugung einer auf einen konstanten Wert geregelten Gleichspannung, mit zwei Ausgangsanschlüssen, an die ein elektrischer Verbraucher (60) und/oder der Ausgang wenigstens einer weiteren gleichartigen Schaltungsanordnung anschließbar sind, wobei die Schaltungsanordnung in einem der beiden zu ihren Ausgangsanschlüssen (81, 82) führenden Strompfaden eine Entkopplungsdiode (32) aufweist und einen Regler (4) enthält, der an eine Anordnung (5) zur Istwertbildung angeschlossen ist, die einen zwischen den Ausgangsanschlüssen (81, 82) liegenden ohmschen Spannungsteiler (14, 15) enthält, wobei der Regler (4) Abweichungen der von der Anordnung (5) zur Istwertbildung abgegebenen Istwertspannung (U4) von einer Referenzspannung wenigstens näherungweise eliminiert, **dadurch gekennzeichnet,** daß das Bezugspotential (42) des Reglers (4) an den Anschluß der Entkopplungsdiode (32), der dem Ausgangsanschluß abgewandt ist, angeschlossen ist und daß die Anordnung (5) zur Istwertbildung zwischen einem Istwertspannungseingang (41) des Reglers (4) und dem Bezugspotentialanschluß (42) des Reglers (4) eine Parallelschaltung aus einem Widerstand (12) einerseits und der Serienschaltung aus der Emitter-Kollektorstrecke eines Transistors (2) und einem weiteren Widerstand (13) andererseits enthält und daß die Basis des Transistors (2) an den Abgriff (85) des zwischen den Ausgangsanschlüssen (81, 82) liegenden Spannungsteilers (14, 15) angeschlossen ist und daß zwischen dem Istwertspannungseingang (41) des Reglers (4) und dem anderen Ausgangsanschluß (81) eine Serienschaltung aus einem Widerstand (11) und einer in bezug auf die Ausgangsspannung (U2) in Durchlaßrichtung gepolten zusätzlichen Diode (31) liegt.

2. Schaltungsanordnung nach Anspruch 1, **dadurch gekennzeichnet,** daß die zusätzliche Diode (31) durch einen bipolaren Transistor gebildet ist, dessen Basis und Kollektor miteinander verbunden sind.

3. Schaltungsanordnung nach Anspruch 2, **dadurch gekennzeichnet,** daß die beiden Transistoren (2, Diode 31) vom gleichen Typ sind.

4. Schaltungsanordnung nach Anspruch 2 oder 3, **dadurch gekennzeichnet,** daß die beiden Transistoren (2, Diode 31) thermisch eng gekoppelt sind.

5. Schaltungsanordnung nach einem der vorhergehenden Ansprüche, **dadurch gekennzeichnet,** daß der Wert des in Serie zur zusätzlichen Diode (31) liegenden Widerstandes (11) und der Wert des in der Anordnung zur Istwertbildung (5) in Serie zur Emitter-Kollektorstrecke des Transistors (2) liegenden Widerstandes (13) gleich groß sind.

## Claims

1. Switched-mode power supply having an input switch for generating a DC voltage, regulated to a constant value, having two output connections, to which there can be connected an electrical load (60) and/or the output of at least one further circuit similar arrangement, the circuit arrangement having a decoupling diode (32) in one of the two current paths leading to its output connections (81, 82) and containing a regulator (4), which is connected to an arrangement (5) for actual value formation, which arrangement contains a resistive voltage divider (14, 15) between the output connections (81, 82), the regulator (4) eliminating, at least approximately, deviations of the actual value voltage (U4), emitted by the arrangement (5) for actual value formation, from a reference voltage, characterized in that the reference potential (42) of the regulator (4) is connected to that connection of the decoupling diode (32) which is remote from the output connection, in that the arrangement (5) for actual value formation contains, between an actual value voltage input (41) of the regulator (4) and the reference potential connection (42) of the regulator (4), a parallel circuit comprising, on the one hand, a resistor (12) and, on the other hand, the series circuit formed by the emitter-collector path of a transistor (2) and a further resistor (13), in that the base of the transistor (2) is connected to the tap (85) of the voltage divider (14, 15) between the output connections (81, 82), and in that, between the actual value voltage input (41) of the regulator (4) and the other output connection (81), there is a series circuit formed by a resistor (11) and an additional diode (31), which is polarized in the forward direction with reference to the output voltage (U2),

2. Circuit arrangement according to Claim 1, characterized in that the additional diode (31) is formed by a bipolar transistor, the base and collector of which are connected to one another.

3. Circuit arrangement according to Claim 2, characterized in that the two transistors (2, diode 31) are of the same type.

4. Circuit arrangement according to Claim 2 or 3, characterized in that the two transistors (2, diode 31) are thermally closely coupled.

5. Circuit arrangement according to one of the preceding claims, characterized in that the value of the resistor (11), which is in series with the additional diode (31), and the value of the resistor (13), which is in the arrangement for actual value formation (5) and is in series with the emitter-collector path of the transistor (2), are equal.

**Revendications**

1. Alimentation à découpage comportant un interrupteur d'entrée, destiné à la production d'une tension continue réglée sur une valeur constante, comportant deux bornes de sortie, auxquelles un récepteur électrique (60) et/ou la sortie d'au moins un autre montage du même type peuvent être connectés, le montage comprenant dans l'une des deux voies de courant menant à ses bornes (81, 82) de sortie une diode (32) de découplage et le montage comprenant un régulateur (4), qui est connecté à un dispositif (5) de formation de la valeur réelle, lequel dispositif comprend un diviseur (14, 15) ohmique de tension se trouvant entre les bornes (81, 82) de sortie, le régulateur (4) éliminant au moins de manière approchée des écarts de la tension (U4) de valeur réelle fournie par le dispositif (5) de formation de la valeur réelle par rapport à une tension de référence, caractérisé en ce que le potentiel (42) de référence du régulateur (4) est connecté à la borne de la diode (32) de découplage, qui est éloignée de la borne de sortie, le dispositif (5) de formation de la valeur réelle comprend entre une entrée (41) de tension de valeur réelle du régulateur (4) et la borne (42) de potentiel de référence du régulateur (4) un circuit parallèle constitué d'une résistance (12) d'une part et du circuit-série formé par la voie émetteur-collecteur d'un transistor (2) et par une autre résistance (13) d'autre part, la base du transistor (2) est connectée à la prise (85) du diviseur (14,15) de tension se trouvant entre les bornes (81, 82) de sortie et un circuit-série constitué d'une résistance (11) et d'une diode (31) supplémentaire polarisée dans le sens passant par rapport à la tension (U2) de sortie se trouve entre l'entrée (41) de tension de valeur réelle du régulateur (4) et l'autre borne (81) de sortie.

2. Alimentation à découpage suivant la revendication 1, caractérisé en ce que la diode (31) supplémentaire est formée par un transistor bipolaire, dont la base et le collecteur sont reliés l'un à l'autre.

3. Alimentation à découpage suivant la revendication 2, caractérisé en ce que les deux transistors (2, diode 31) sont du même type.

4. Alimentation à découpage suivant la revendication 2 ou 3, caractérisé en ce que les deux transistors (2, diode 31) sont couplés de façon étroite thermiquement.

5. Alimentation à découpage suivant l'une des revendications précédentes, caractérisé en ce que la valeur de la résistance (11) en série avec la diode supplémentaire (31) et la valeur de la résistance (13) se trouvant dans le dispositif (5) de formation de la valeur réelle et en série avec la section émetteur-collecteur du transistor (2) sont les mêmes.